# EUROPEAN PATENT SPECIFICATION

(11) **EP 3 278 507 B1**
(45) Date of publication and mention of the grant of the patent: **28.10.2020**
(21) Application number: 15888023.7
(22) Date of filing: 02.04.2015
(51) Int. Cl.: H04L 12/803

(54) **METHOD AND APPARATUS PROVIDING MME REDUNDANCY ACROSS EXTENDED GEOGRAPHIC AREAS**
VERFAHREN UND VORRICHTUNG ZUR BEREITSTELLUNG VOM MME-REDUNDANZ ÜBER ERWEITERTE GEOGRAFISCHE GEBIETE
PROCÉDÉ ET APPAREIL FOURNISSANT UNE REDONDANCE DE MME À TRAVERS DES ZONES GÉOGRAPHIQUES ÉTENDUES

(43) Date of publication of application: 07.02.2018
(73) Proprietor: Nokia Solutions and Networks Oy, 02610 Espoo (FI)
(72) Inventor: HOSDURG, Santhosh, Kumar, Dunwoody, GA 30338 (US); ZHENG, Haihong, Coppell, TX 75019 (US)
(74) Representative: Nokia EPO representatives
(86) International application number: PCT/US2015/024062
(87) International publication number: WO 2016/160018

(56) References cited:
- EP-A1- 1 715 715
- EP-A1- 2 265 054
- EP-A2- 1 921 811
- WO-A1-2014/088479
- US-A1- 2002 147 771
- US-A1- 2011 151 774
- US-B1- 6 996 081
- US-B1- 8 483 682
- US-B2- 8 995 262
- MOTOROLA ET AL: "Update of Functionality for Load Balancing/Re-balancing Between MMEs and MME Control of Overload", 3GPP DRAFT; S2-083019_23 401CR0198R1_MME_LOAD_BAL_&_OVRLD_CNTL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Jeju; 20080408, 8 April 2008 (2008-04-08), XP050265243, [retrieved on 2008-04-08]

## Description

### BACKGROUND:

### Field:

Embodiments of the invention generally relate to mobile communications networks, such as, but not limited to, the Universal Mobile Telecommunications System (UMTS) Terrestrial Radio Access Network (UTRAN), Long Term Evolution (LTE) Evolved UTRAN (E-UTRAN). For example, some embodiments relate to a method and apparatus to keep geographic area traffic within local mobility management entities (MMEs) while providing MME redundancy across extended geographic areas within an MME pool.

### Description of the Related Art:

Universal Mobile Telecommunications System (UMTS) Terrestrial Radio Access Network (UTRAN) refers to a communications network including base stations, or Node-Bs, and radio network controllers (RNC). UTRAN allows for connectivity between the user equipment (UE) and the core network. The RNC provides control functionalities for one or more Node-Bs. The RNC and its corresponding Node-Bs are called the Radio Network Subsystem (RNS).

Long Term Evolution (LTE) refers to improvements of the UMTS through improved efficiency and services, lower costs, and use of new spectrum opportunities. In particular, LTE is a 3rd Generation Partnership Project (3GPP) standard that provides for uplink peak rates of at least 50 megabits per second (Mbps) and downlink peak rates of at least 100 Mbps. LTE supports scalable carrier bandwidths from 20 MHz down to 1.4 MHz and supports both Frequency Division Duplexing (FDD) and Time Division Duplexing (TDD).

As mentioned above, LTE may also improve spectral efficiency in networks, allowing carriers to provide more data and voice services over a given bandwidth. Therefore, LTE is designed to fulfill the needs for highspeed data and multimedia transport in addition to high-capacity voice support. Advantages of LTE include, for example, high throughput, low latency, FDD and TDD support in the same platform, an improved end-user experience, and a simple architecture resulting in low operating costs. In addition, LTE is an all internet protocol (IP) based network, supporting both IPv4 and Ipv6.

An example of the prior art can be found in EP2265054.

### SUMMARY:

One embodiment is directed to a method that may include receiving, at a control node, an overload indicator indicating a loading status of another control node. The method may also include adjusting a relative capacity value of the control node based on the overload indicator for a network element. The method may further include directing the network element to guide a user equipment to or away from the control node based on the relative capacity value of the control node.

The method may also include initiating load balancing tracking area update to direct the user equipment to reconnect to the control node. In an embodiment, the control node and the network element may include a geographic identification based on a geographical area of the control node and the network element. In another embodiment, the adjusting may further include adjusting the relative capacity value of the control node based on the geographic identification of the network element.

According to an embodiment, the control node may be considered to be local to the network element when the control node and the network element have the same geographic identification. According to another embodiment, the control node may be considered to be remote to the network element when the control node and the network element have different geographic identifications.

In an embodiment, the overload indicator may include at least one of an overload on or off indication, the relative capacity value of the control node, or the geographic identification of the control node and network element. In another embodiment, when the overload indicator includes an overload on indication, the control node may increase its relative capacity value. In an embodiment, the directing, may further include directing the network element in the geographical area of the control node to guide the user equipment to the control node. In another embodiment, when the overload indicator includes an overload off indication, the control node may decrease its relative capacity value. In an embodiment, the directing may further include directing the network element in the geographical area of the control node to guide the user equipment away from the control node.

Another embodiment is directed to a method, that may include receiving, at a network element, a relative capacity value of a control node. The method may also include guiding a user equipment to or away from the control node based on the relative capacity value of the control node.

In an embodiment, the control node and the network element may include a geographic identification based on a geographical area of the control node and the network element. In another embodiment, the network element may be considered to be local to the control node when the network element and the control node have the same geographic identification. In an embodiment, the network element may be considered to be remote to the control node when the network element and the control node have different geographic identifications.

According to an embodiment, the guiding may further include guiding the user equipment to the control node when an overload indicator of the control node includes an overload on indication. According to an embodiment, the guiding may further include guiding the user equipment away from the control node when an overload indicator of the control node includes an overload off indication.

Another embodiment may be directed to an apparatus that includes at least one processor, and at least one memory including computer program code. The at least one memory and the computer program code may be configured, with the at least one processor, to cause the apparatus at least to receive overload indicator indicating a loading status of another control node. The at least one memory and the computer program code may also be configured, with the at least one processor, to cause the apparatus at least to adjust a relative capacity value of the apparatus based on the overload indicator for a network element. The at least one memory and the computer program code may further be configured, with the at least one processor, to cause the apparatus at least to direct the network element to guide a user equipment to or away from the apparatus based on the relative capacity value of the apparatus.

Another embodiment may be directed to an apparatus that includes at least one processor, and at least one memory including computer program code. The at least one memory and the computer program code may be configured, with the at least one processor, to cause the apparatus at least to receive a relative capacity value of a control node. The at least one memory and the computer program code may further be configured, with the at least one processor, to cause the apparatus at least to guide a user equipment to or away from the control node based on the relative capacity value of the control node.

Another embodiment may be directed to an apparatus that includes receiving means for receiving an overload indicator indicating a loading status of another control node. The apparatus may also include adjusting means for adjusting a relative capacity value of the apparatus based on the overload indicator for a network element. The apparatus may further include directing means for directing the network element to guide a user equipment to or away from the apparatus based on the relative capacity value of the apparatus.

In an embodiment, the apparatus may also include initiating means for initiating load balancing tracking area update to direct the user equipment to reconnect to the apparatus. In another embodiment, the apparatus and the network element may include a geographic identification based on a geographical area of the apparatus and the network element. In an embodiment, the adjusting means may further adjust the relative capacity value of the apparatus based on the geographic identification of the network element.

According to an embodiment, the apparatus may be considered to be local to the network element when the apparatus and the network element have the same geographic identification. According to another embodiment, the apparatus may be considered to be remote to the network element when the apparatus and the network element have different geographic identifications.

In an embodiment, the overload indicator may include at least one of an overload on or off indication, the relative capacity value of the apparatus, or the geographic identification of the apparatus and network element. In another embodiment, the overload indicator comprises an overload on indication, the apparatus increases its relative capacity value, and the directing means further directs the network element in the geographical area of the apparatus to guide the user equipment to the apparatus. In an embodiment, when the overload indicator includes an overload off indication, the apparatus may decrease its relative capacity value. In another embodiment, the directing means may further direct the network element in the geographical area of the apparatus to guide the user equipment away from the apparatus.

Another embodiment may be directed to an apparatus that includes receiving means for receiving a relative capacity value of a control node. The apparatus may also include guiding means for guiding a user equipment to or away from the control node based on the relative capacity value of the control node.

According to an embodiment, the control node and the apparatus may include a geographic identification based on a geographical area of the control node and the apparatus. According to another embodiment, the apparatus may be considered to be local to the control node when the apparatus and the control node have the same geographic identification. According to an embodiment, the apparatus may be considered to be remote to the control node when the apparatus and the control node have different geographic identifications.

In an embodiment, the guiding means may further guide the user equipment to the control node when an overload indicator of the control node includes an overload on indication. In another embodiment, the guiding may further include guiding the user equipment away from the control node when an overload indicator of the control node includes an overload off indication.

Another embodiment is directed to a computer program, embodied on a non-transitory computer readable medium, the computer program configured to control a processor to perform the method according to any one of the methods described above.

Embodiments, which do not fall within the scope of the appended set of claims are to be interpreted as background information, useful for understanding the invention. The invention is defined by the annexed claims.

### BRIEF DESCRIPTION OF THE DRAWINGS:

For proper understanding of the invention, reference should be made to the accompanying drawings, wherein:
Figure 1 illustrates an example of an S I-Flex or MME pooling concept.
Figure 2 illustrates a block diagram of an example of an existing solution.
Figure 3 illustrates an example of a network topology of a network operator.
Figure 4 illustrates another example of a network topology of a network operator.
Figure 5 illustrates a block diagram of a solution, according to certain embodiments.
Figure 6 illustrates a system, according to certain embodiments.
Figure 7 illustrates an apparatus, according to certain embodiments.
Figure 8 illustrates another apparatus, according to certain embodiments.
Figure 9 illustrates an example flow diagram of a method, according to certain embodiments.
Figure 10 illustrates an example flow diagram of another method, according to certain embodiments.
Figure 11 illustrates an example flow diagram of another method, according to certain embodiments.
Figure 12 illustrates an example flow diagram of another method, according to certain embodiments.

### DETAILED DESCRIPTION:

The features, structures, or characteristics of the invention described throughout this specification may be combined in any suitable manner in one or more embodiments. For example, the usage of the phrases "certain embodiments," "some embodiments," or other similar language, throughout this specification refers to the fact that a particular feature, structure, or characteristic described in connection with the embodiment may be included in at least one embodiment of the present invention.

Thus, appearances of the phrases "in certain embodiments," "in some embodiments," "in other embodiments," or other similar language, throughout this specification do not necessarily all refer to the same group of embodiments, and the described features, structures, or characteristics may be combined in any suitable manner in one or more embodiments. Additionally, if desired, the different functions discussed below may be performed in a different order and/or concurrently with each other. Furthermore, if desired, one or more of the described functions may be optional or may be combined. As such, the following description should be considered as merely illustrative of the principles, teachings and embodiments of this invention, and not in limitation thereof.

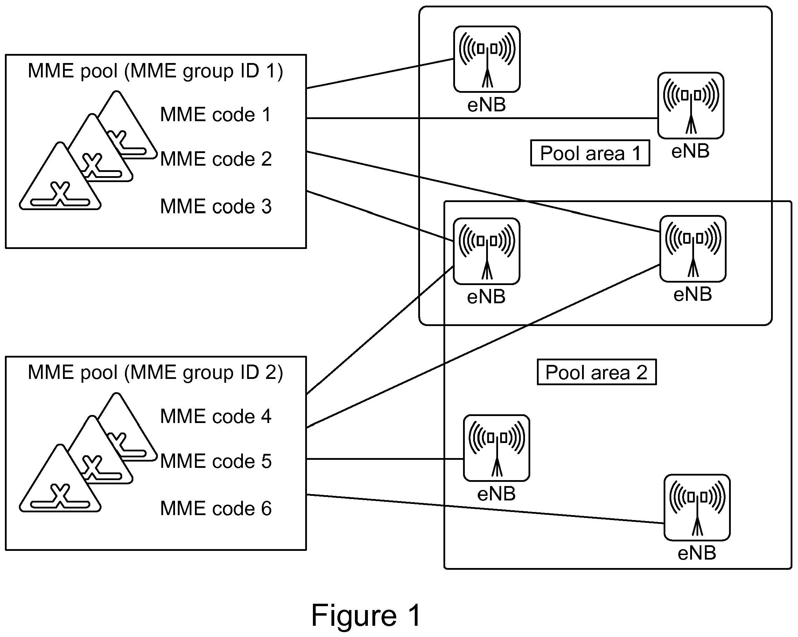

Figure 1 illustrates an example of an S1-Flex or MME pooling concept. In particular, as shown in Figure 1, in an LTE network, the S1-Flex or MME pooling concept may provide support for network redundancy and load sharing of traffic between MMEs by creating pools of MMEs, allowing each evolved node B (eNB) to be connected to multiple MMEs.

With the S1-Flex feature, other MMEs within a pool may provide services when one of the MMEs is not available. For example, network upgrade and maintenance work may be carried out without disturbing the traffic. This functionality permits UEs that are entering into an MME pool area to be directed to an appropriate MME in a manner that achieves load balancing between MME's. This may be achieved by setting a weight factor for each MME so that the probability of the eNB selecting an MME is proportional to its weight factor. The weight factor may typically be set according to the capacity of an MME node relative to other MME nodes. The weight factor may also be sent from the MME to the eNB via S1-AP messages. Further, in an embodiment, the weight factor may be in a range of 0-255.

The MME selection function may be located in the eNB. To allow the eNB to select the specific MME from the pool, each MME may be associated with a globally unique MME identifier (GUMMEI), which consists of a public land mobile network (PLMN) identity, an MME group identity and an MME code. The operator may control load balancing between MMEs within the MME pool by setting a weight factor for each MME. As used herein, the weight factor may be referred to as "relative capacity" (RC). RC may be a configurable parameter in the MME and can be changed by the operator per load condition. Generally, one RC may be configured in the MME based on its load condition.

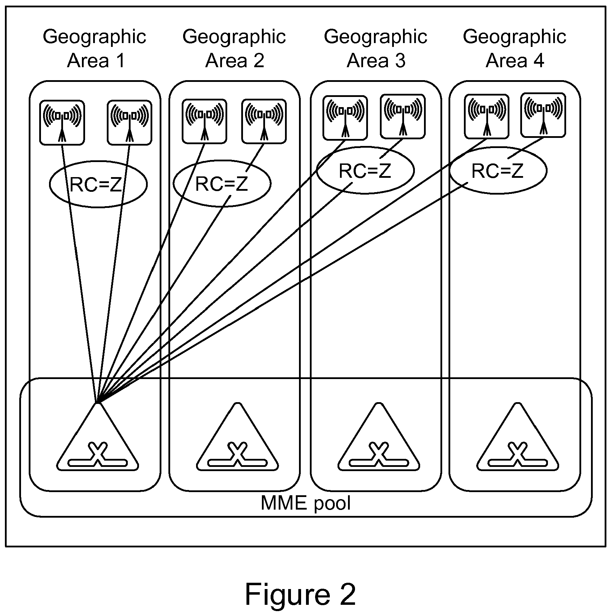

Figure 2 illustrates a block diagram of an example of an existing solution. In particular, in the LTE deployment, many operators deploy MMEs in different geographic areas and group them into the same MME pool to provide redundancy and load balancing in case some of them are overloaded. In such deployment, it may save equipment and maintenance costs while providing redundancy among the MMEs in the pool in cases of MME failure. However, MMEs in different geographic areas may be grouped together into the same pool, and each MME may provide the same RC to all the eNBs connecting to it. Under normal conditions, the RC for MMEs may be similar to each other to provide an evenly distributed load. Therefore, an eNB's selection of MMEs may be based on the RC, and the eNB may direct UEs to the MMEs that are geographically far away from the eNB, which leads to longer S1 signaling delay that would contribute to additional latency for UE related network access and mobility procedures.

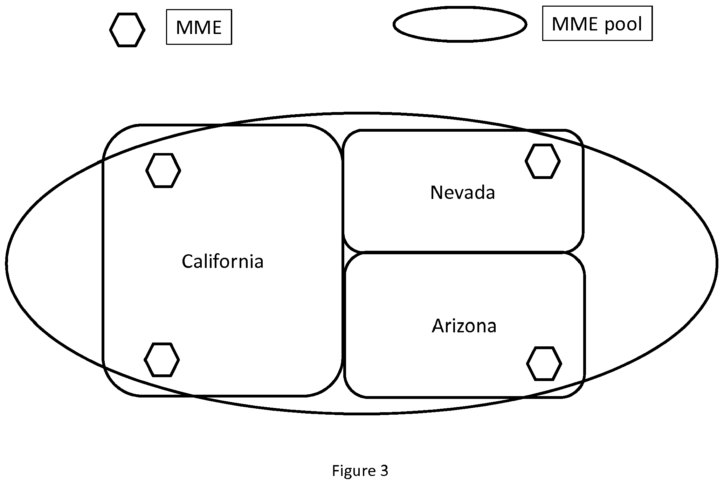

Figure 3 illustrates an example of network topology of an LTE network operator. As shown in the LTE network topology of Figure 3, MMEs in different geographic locations may be grouped into the same MME pool. For example, as shown in Figure 3, MMEs in California, Nevada, and Arizona may be grouped in the same MME pool. Under normal conditions, the RC for MMEs in one or more of these states may be the same and may be provided to all of the eNBs in the one or more states. Therefore, eNBs in one of the one or more states may have the same possibility of directing UEs to one state's MME as to another state's MME. As a result, UEs in one of the one or more states may connect to the MME in another state. This may lead to a longer S1-MME signal delay, which would also contribute to additional latency for UE related network access and mobility procedures.

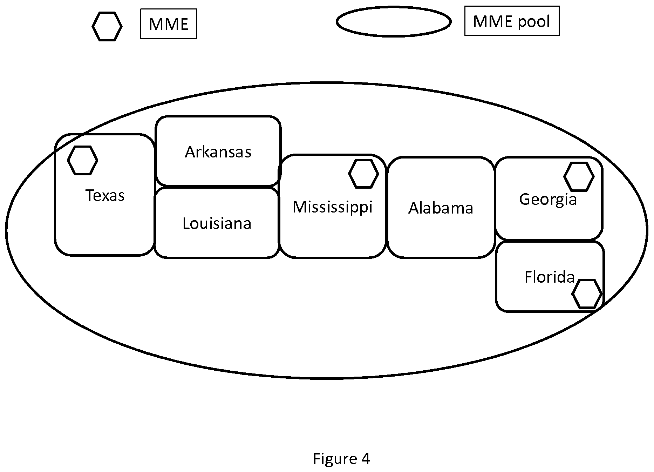

Figure 4 illustrates another example of a network topology based on a 1:N redundancy requirement. In particular, as another example, based on a 1:N redundancy requirement among MMEs in different geographic areas from a large operator, a general topology of an LTE evolved packet core (EPC) is shown in Figure 4. With such an optimized pool configuration with a 1:N redundancy scheme for maximum hardware (HW) utilization, eNBs may have a high possibility of connecting to remote MMEs. For example, the Texas eNB may connect to the Florida MME even when the local MME is not overloaded.

In another example, some other network providers have a requirement to keep the local traffic locally while providing network redundancy between MMEs in a different geographic location. This requires MMEs in different geographic areas grouped into the same MME pool to provide redundancy, while remote MMEs are only used when the local MMEs fail. However, with a single RC defined in MME and provided to all the eNBs connecting to the MME pool, such requirement cannot be met.

According to certain embodiments the problems identified above may be addressed according to a first approach with uniform RC and local MME controlled load balancing triggering. For example, each MME in the same pool may provide its own RC to all of the connected eNBs (including eNBs in the same or different geographic areas). This may be completed in an S1 setup procedure or MME configuration update procedure. Such RC may be the same for all the connected eNBs. In addition to the RC, the eNB may also need to know the localness of each connected MME. For example, the eNB may also need to know if the connected MME is "local" or "remote." The connected MME may be "local" if the eNB and the MME are geographically located close by. Alternatively, the connected MME may be "remote" if the eNB and MME are geographically located far away. There may be several methods to convey or derive such information.

In a first method, the MME may also indicate its localness information. For example, if the MME is a local MME for the eNB, which is geographically close to the eNB, or if the MME is a remote MME for the eNB, which is geographically far away from the eNB. Such localness indication may be sent in an S1 setup response message or MME configuration update message or other S1-C signaling message. Localness may be derived by the MME from a tracking area code (TAC) of the eNB or other information.

In a second method, an additional configuration may be included in the eNB to indicate a given MME as local or remote. In an embodiment, this functionality of configuring the localness information of an MME at the eNB, may be switched ON or OFF using a feature in the eNB. With the functionality ON, a given MME can be configured as a local MME or a remote MME with manual configuration. This method does not require any changes in MME software or signaling mechanism. This method may also be introduced as an enhancement to the eNB load balancing function.

After the eNB obtains the MME localness information and RC, it may use the information to select an MME for traffic routing purposes. In an embodiment, the eNB may establish S1 MME connections with all the MMEs within an MME pool. Further, in the normal non-overloaded condition, although the eNB may have an S1 connection to the MME with the localness=remote, the eNB may ignore the RC of the remote MME and not perform load balancing. The eNB may always direct UEs to the MME with localness=local in such a condition.

According to an embodiment, when an overload condition occurs in the local MME and a predefined load balancing start threshold is met, the local MME may send an MME configuration update message with a "Load Balancing Required" indication included. After receiving this message, the eNB may perform load balancing based on the RC for all of the connected MMEs (including MME localness = local or remote). In an embodiment, the relative capacity may have an associated range of 0-255. Further, this load balancing start threshold value may be implementation and operator configuration specific.

When the load becomes lower, and a load balancing stop threshold is met, the MME may send an MME configuration update message with a "Load Balancing Withdrew" indication included. After receiving this message, the eNB may stop load balancing and perform normally as in a non-overloaded condition. In order to move the UE from the remote MME back to the local MME, load balancing can be triggered during a maintenance window from the remote MME based on an existing procedure by the operator. Further, this load balancing stop threshold value may be implementation and operator configuration specific.

With the approach described above, eNBs may always direct UEs to the MMEs that are geographically close by in normal network conditions. Further, load balancing may be triggered to direct UEs to MMEs in geographically far away locations when an overload condition is met in local MMEs. An advantage to this approach is that it may reduce S1 signaling delay. This approach may also meet the requirement from the operator to keep traffic local while providing redundancy among MMEs in the MME pool with MME nodes spread across a geographically large area.

According to certain embodiments, a second approach may involve different RCs for eNBs in different geographic areas and an overload indication between MMEs. For example, the MMEs and eNBs may be configured with a new parameter, GEO-ID. The MMEs and eNBs in one geographical area may be configured with the same GEO-ID. Such information may be provided between eNBs and MMEs during an S1 setup procedure, and between MMEs in the MME pool during an S10 setup procedure. If the eNBs and MMEs are with the GEO-ID, then they are considered to be local between each other; otherwise they are remote from each other.

Under normal network conditions, a different RC may be defined in the MME for different geographic areas. The MME may send its RC in a normal MME configuration update procedure to the eNBs. The MME may choose to use different values of RC for different geographic areas and provide those different values to eNBs in different areas.

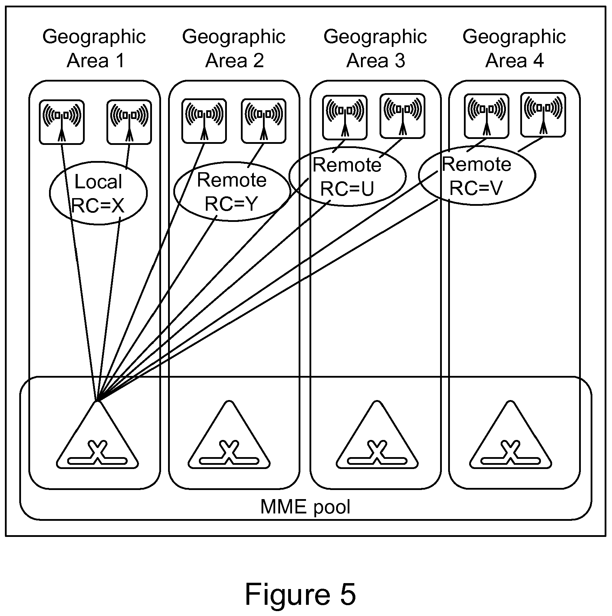

For example, Figure 5 illustrates a block diagram of a solution, according to certain embodiments. As shown in Figure 5, the MME may send a large RC value to the eNBs that are geographically close to the MME (local MMEs) and a lower RC value to the eNBs that are geographically distant from MME (remote MMEs). In Figure 5, X>Y in non-overload conditions in the MMEs. The geographic area may be defined per tracking area, or multiple tracking areas, or any other method which is up to operator configuration. With this enhanced approach, under normal network conditions (which may be the most common condition in operating networks), the eNBs may direct most of the UEs to the MMEs that are geographically close by, which may lead to lower delay of S1 signaling.

When overloading occurs in one MME, the MME may send an overload indicator (with overload indication = ON) to one or more of other MMEs in the MME pool over an S10 interface. The overload indicator may include but is not limited to the following information: (i) Overload Indicator = On or Off; (ii) current RC value of the MME; and/or (iii) GEO-ID of the eNB and MME.

In an embodiment, the local MME may choose one or more of the MMEs in the pool to send the overload indicator message depending on location of the other MMEs. The local MME may choose one that is geographically close by to trigger load balancing first. If the overload condition still cannot be solved, the local MME may choose another one that could be geographically further to send the indication.

When the load reduces to a certain level in one MME, the MME may send an overload indicator (with Overload Indication = OFF) to one or more of the MMEs in the pool over the S10 interface. In an embodiment, the reduced load level may be vendor implementation or operator configuration dependent. Further, the overload indicator may include but is not limited to the following information: (i) Overload Indicator = Off; (ii) current RC value of the MME; and/or (iii) GEO-ID of the eNB and MME.

When MME in the pool receives the overload indicator with "Overload Indicator = ON", it may increase the RC value for the eNBs with the same GEO-ID as the MME that sent the overload indicator so that eNBs in that geographical area can direct more UEs to the remote MME based on the increased RC. In an embodiment, the increased RC value may be vendor implementation or operator configuration dependent. Furthermore, the remote MME may initiate load balancing or offload procedures to trigger UEs to perform load balancing tracking area update (TAU) to direct UEs to reconnect to the remote MMEs.

When MME in the pool receives the overload indicator with "Overload Indicator = OFF", it may decrease the RC value for the eNBs with the same GEO-ID as the MME that sent the overload indicator so that eNBs in that geographical area do not direct more UEs to the remote MME based on the decreased RC. In an embodiment, the decreased RC value may be vendor implementation or operator configuration dependent. Furthermore, the remote MME may initiate load balancing or offload procedure to trigger UEs to perform load balancing TAU to direct UEs to reconnect to the local MMEs.

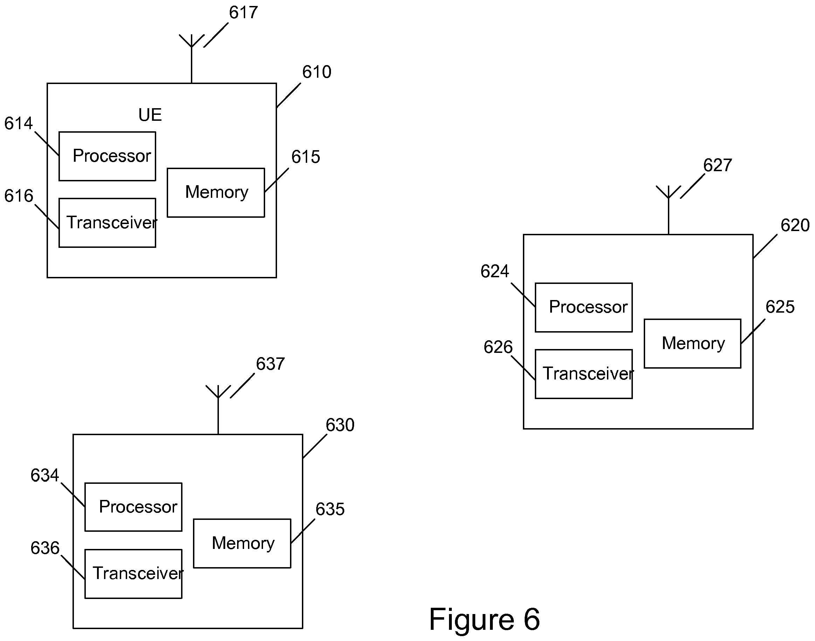

Figure 6 illustrates an example of a system according to certain embodiments. In one embodiment, a system may include multiple devices, such as, for example, at least one apparatus 610, network element 620 and control node 630.

The apparatus 610 can be any terminal device, such as a UE, a cell phone, a smart phone, a personal digital assistant, a tabletop computer, a personal computer, a laptop computer, a mini-tablet computer, a tablet computer, or the like.

In certain embodiments, the network element 620 may be a node, host, or server in a communications network or serving such a network. For example, in certain embodiments, the network element 620 may be an access node for a radio access network, such as a base station in UMTS or eNB in LTE or LTE-A. However, in other embodiments, the network elements 620 may be other components within a radio access network. Additionally, in an embodiment, the control node 630 may an MME, including a local MME or a remote MME, or other similar node for a network or access-network.

Each of these devices may include at least one processor, respectively indicated as 614, 624, and 634 for processing information and executing instructions or operation. Processors 614, 624, and 634 may be any type of general or specific purpose processor. While a single processor 614, 624, and 634 is shown for each device in Figure 6, multiple processors may be utilized in each device according to other embodiments. In fact, processors 614, 624, and 634 may include one or more of general-purpose computers, special purpose computers, microprocessors, central processing units (CPU), digital signal processors (DSPs), field-programmable gate arrays (FPGAs), application-specific integrated circuits (ASICs), and processors based on a multi-core processor architecture, as examples, or other comparable devices.

The processors can be implemented as a single controller, or a plurality of controllers or processors. The processors may also perform functions associated with the operation of the system including, without limitation, precoding of antenna gain/phase parameters, encoding and decoding of individual bits forming a communication message, formatting of information, and overall control of the system, including process related to management of communication resources.

At least one memory (internal or external) can be provided in each device, and indicated as 615, 625 and 635, respectively. The memory may include computer program instructions or computer code contained therein. The processors 614, 624 and 634, and memories 615, 625 and 635, or a subset thereof, can be configured to provide means corresponding to the various blocks and processes shown in Figures 5 and 9-12.

Memories 615, 625, and 635 can independently be any suitable storage device, such as a non-transitory computer-readable medium. A hard disk drive (HDD), random access memory (RAM), flash memory, or other suitable memory can be used. The memories can be combined on a single integrated circuit as the processor, or may be separate from the one or more processors. Furthermore, the computer program instructions stored in the memory and which may be processed by the processors can be any suitable form of computer program code, for example, a compiled or interpreted computer program written in any suitable programming language.

The memory and the computer program instructions can be configured, with the processor for the particular device, to cause a hardware apparatus such as apparatus 610, network element 620, and control node 630 to perform any of the processes described herein (see, for example, Figures 5 and 9-12). Therefore, in certain embodiments, a non-transitory computer-readable medium can be encoded with computer instructions that, when executed in hardware, perform a process such as one of the processes described herein. Alternatively, certain embodiments of the invention can be performed entirely in hardware.

As shown in Figure 6, transceivers 616, 626, and 636 can be provided, and each device may also include an antenna, respectively illustrated as 617, 627, and 637. Other configurations of these devices, for example, may be provided as well.

Transceivers 616, 626, and 636 can each, independently, be a transmitter, a receiver, or both a transmitter and a receiver, or a unit or device that is configured both for transmission and reception. For example, the transceivers 616, 626, and 636 may be configured to modulate information onto a carrier waveform for transmission by the antennas 617, 627 and 637, and demodulate information received via the antennas 617, 627, and 637 for further processing by other elements of the system shown in Figure 6. In other embodiments, transceivers 616, 626, and 636 may be capable of transmitting and receiving signals or data directly.

Although Figure 6 illustrates a system including an apparatus 610, network element 620 and control node 630, embodiments of the invention may be applicable to other configurations, and configurations involving additional elements. For example, not shown, additional UEs, eNBs and/or MMEs may be present.

As mentioned above, according to one embodiment, the system shown in Figure 6 may include apparatus 610, network element 620 and control node 630, for example. In an embodiment, the control node 630, such as an MME, including a local MME or remote MME, or other control node or similar device, may be controlled by memory 635 and processor 634 to perform the various functions of the second approach described above.

In an embodiment, the control node 630 may be controlled by memory 635 and processor 634 to receive, at the control node, an overload indicator indicating a loading status of another control node. The control node 630 may also be controlled by memory 635 and processor 634 to adjust a relative capacity value of the control node based on the overload indicator for a network element. The control node 630 may further be controlled by memory 635 and processor 634 to direct the network element to guide a user equipment to or away from the control node based on the relative capacity value of the control node.

In an embodiment, the control node 630 may also be controlled by memory 635 and processor 634 to initiate load balancing tracking area update to direct the user equipment to reconnect to the control node. According to an embodiment, the control node and the network element may include a geographic identification based on a geographical area of the control node and the network element. According to another embodiment, the adjusting may further include the control node 630 being controlled by memory 635 and processor 634 to adjust the relative capacity value of the control node based on the geographic identification of the network element.

In an embodiment, the control node may be considered to be local to the network element when the control node and the network element have the same geographic identification. In another embodiment, the control node may be considered to be remote to the network element when the control node and the network element have different geographic identifications. In yet another embodiment, the overload indicator may include at least one of an overload on or off indication, the relative capacity value of the control node, or the geographic identification of the control node and network element.

According to an embodiment, when the overload indicator includes an overload on indication, the control node 630 may be controlled by memory 635 and processor 634 to increase its relative capacity value, and to direct the network element in the geographical area of the control node to guide the user equipment to the control node. According to another embodiment, when the overload indicator includes an overload off indication, the control node 630 may be controlled by memory 635 and processor 634 to decreases its relative capacity value, and to direct the network element in the geographical area of the control node to guide the user equipment away from the control node.

In an embodiment, the control node 630 may be part of a pool of multiple control nodes, and the control node 630 may be controlled by memory 635 and processor 634 to choose another control node among the pool of control nodes that is geographically close by to trigger load balancing. Alternatively, the control node 630 may be controlled by memory 635 and processor 634 to choose another control node that could be geographically further to send the overload indicator.

According to an embodiment, the control node 630 may be controlled by memory 635 and processor 634 to initiate load balancing or offload procedure to trigger the user equipment to perform load balancing tracking area update to direct the user equipment to reconnect to the remote control node. According to another embodiment, the control node 630 may also be controlled by memory 635 and processor 634 to initiate load balancing or offload procedure to trigger the user equipment to perform load balancing tracking area update to direct the user equipment to reconnect to the local control node.

Additionally, in another embodiment, under normal network conditions, the control node 630 may be controlled by memory 635 and processor 634 to send its relative capacity value to the network element in a normal control node configuration update procedure. According to an embodiment, the control node 630 may receive the overload indicator over an S10 interface. According to another embodiment, the geographic identification of the control node and the network element may be provided between the network element and control node during an S1 setup procedure, and between the control node and a pool of control nodes during an S10 setup procedure.

According to another embodiment, the control node 630 may also be controlled by memory 635 and processor 634 to perform the various functions of the first approach described above. For example, in an embodiment, the control node 630 may be controlled by memory 635 and processor 634 to provide a relative capacity value to a network element in the same or different geographic area as the control node.

The control node 630 may also be controlled by memory 635 and processor 634 to indicate, to a network element, localness information of the control node. The localness information may specify whether the control node is a local control node for the network element (geographically close to the network element), or whether the control node is a remote control node for the network element (geographically far away from the network element). In an embodiment, the localness indication may be sent in an S1 setup response message or control node configuration update message or other S1-C signaling message. Further, the localness may be derived by the control node from a tracking area code of the network element or other information.

In another embodiment, the control node may be associated with a globally unique MME identifier (GUMMEI). In an embodiment, a given GUMMEI may be manually configured as a local control node or a remote control node. According to an embodiment, when an overload condition occurs in the control node 630, such as a local control node, and a predefined load balancing start threshold is met, the control node 630 may be controlled by memory 635 and processor 634, to send a control node configuration update message with a "load balancing required" indication to the network element 620, instructing the network element to perform a load balancing operation based on the relative capacity value and the localness information of the control node. According to another embodiment, when the load becomes lower in the control node 630 and a load balancing stop threshold is met, the control node 630 may further be controlled by memory 635 and processor 634 to send a control node configuration message with a "load balancing withdrew" indication to the network element 620, instructing the network element 620 to cease the performance of load balancing and perform normally as in a non-overloaded condition.

As mentioned above, according to one embodiment, the system shown in Figure 6 may include apparatus 610, network element 620 and control node 630, for example. In an embodiment, the network element 620, such as a base station, access point, eNB, or other similar device, may be controlled by memory 625 and processor 624 to perform the various functions of the second approach described above.

In an embodiment, the network element 620 may be controlled by memory 625 and processor 624 to receive a relative capacity value of a control node. The network element 620 may also be controlled by memory 625 and processor 624 to guide a user equipment to or away from the control node based on the relative capacity value of the control node.

According to an embodiment, the control node and the network element may include a geographic identification based on a geographical area of the control node and the network element. According to another embodiment, the network element may be considered to be local to the control node when the network element and the control node have the same geographic identification, and the network element may be considered to be remote to the control node when the network element and the control node have different geographic identifications.

In an embodiment, the overload indicator may include at least one of an overload on or off indication, the relative capacity value of the control node, or the geographic identification of the control node and network element. In another embodiment, the guiding may also include the network element 620 being controlled by memory 625 and processor 624 to guide the user equipment to the control node when the overload indicator of the control node includes an overload on indication. In yet another embodiment, the guiding may further include the network element 620 being controlled by memory 625 and processor 624 to guide the user equipment away from the control node when the overload indicator of the control node includes an overload off indication. According to an embodiment, the network element 620 may also be controlled by memory 625 and processor 624 to perform any of the functions of the eNB described above in the first approach and the second approach.

According to another embodiment, the network element 620 may further be controlled by memory 625 and processor 624 to perform the various functions of the first approach described above. For example, in an embodiment, the network element 620 may be controlled by memory 625 and processor 624 to receive a relative capacity value from a control node. In an embodiment, the network element 620 may be in the same or different geographic area as the control node.

According to an embodiment, the network element 620 may also be controlled by memory 625 and processor 624 to receive localness information from the control node. The localness information may specify whether the control node is a local control node for the network element (geographically close to the network element), or whether the control node is a remote control node for the network element (geographically far away from the network element). Additionally, the localness indication may be sent in an S1 setup response message or control node configuration update message or other S1-C signaling message. Further, the localness may be derived by the control node from a tracking area code of the network element or other information.

In an embodiment, the network element 620 may be controlled by memory 625 and processor 624 to receive the relative capacity value of all control nodes that are connected to the network element 620. In another embodiment, the network element 620 may be controlled by memory 625 and processor 624 to receive a given a GUMMEI as local or remote. In an embodiment, the network element 620 may also be controlled by memory 625 and processor 624, after obtaining the control node localness information and relative capacity value, to use the control node localness information and relative capacity value for traffic routing. For example, the network element 620 may also be controlled by memory 625 and processor 624 to establish an S1 MME connection with all of the control nodes within a pool of control nodes, such as an MME pool that includes multiple MMEs.

According to an embodiment, the network element 620 may further be controlled by memory 625 and processor 624, under normal non-overloaded conditions, to ignore the relative capacity value of the remote control node, and not to perform load balancing. Under normal non-overloaded conditions, the network element 620 may also be controlled by memory 625 and processor 624 to direct the user equipment to the control node with a local localness.

In an embodiment, when an overload condition occurs in a local control node and a predefined load balancing start threshold is met, the network element 620 may be controlled by memory 625 and processor 624 to receive a control node configuration update message with a "load balancing required" indication included. Once received, the network element 620 may further be controlled by memory 625 and processor 624 to perform load balancing based on the relative capacity value for all connected control nodes, including control nodes with a local or remote localness. Further, under overload conditions, the network element 620 may also be controlled by memory 625 and processor 624 to direct the user equipment to the control node with a remote localness.

In another embodiment, when a load becomes lower in the control node and a load balancing stop threshold is met, the network element 620 may be controlled by memory 625 and processor 624 to receive a configuration update message with a "load balancing withdrew" indication included. Once received, the network element 620 may be further controlled by memory 625 and processor 624 to perform load balancing and operate as in a non-overloaded condition. In an embodiment, in order to move the user equipment from the remote control node back to the local control node, load balancing can be triggered during a maintenance window from the remote control node based on existing procedures by an operator.

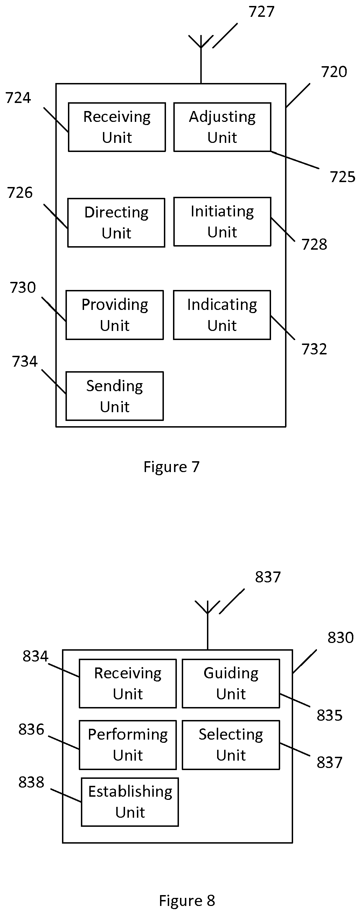

Figure 7 illustrates an apparatus 720, according to certain embodiments. In one embodiment, the apparatus 720 may be a network element, such as, for example, an eNB, base station, access point or other similar device discussed above in connection with Figure 6. It should be noted that one of ordinary skill in the art would understand that apparatus 720 may include other components or features not shown in Figure 7. Additionally, the apparatus 720 may include one or more antennas 727 for transmitting and receiving signals and/or data to and from apparatus 720.

As illustrated in Figure 7, apparatus 720 may include a receiving unit 724 that may be configured to receive, at a control node, an overload indicator indicating a loading status of another control node. The apparatus 720 may also include an adjusting unit 725 that may be configured to adjust a relative capacity value of the control node based on the overload indicator for a network element. The apparatus 720 may further include a directing unit 726 that may be configured to direct the network element to guide a user equipment to or away from the control node based on the relative capacity value of the control node.

The apparatus 720 may also include an initiating unit 728 that may be configured to initiate load balancing tracking area update to direct the user equipment to reconnect to the control node. In an embodiment, the adjusting unit 725 may also be configured to adjust the relative capacity value of the control node based on the geographic identification of the network element. In another embodiment, the directing unit 726 may also be configured to direct the network element in the geographical area of the control node to guide the user equipment to the control node, and direct the network element in the geographical area of the control node to guide the user equipment away from the control node.

Further, the apparatus 720 may include a providing unit 730 that may be configured to provide a relative capacity value of a control node to a network element in a same or different geographic area as the control node. The apparatus 720 may also include an indicating unit 732 that may be configured to indicate localness information of the control node to the network element. Additionally, the apparatus 720 may further include a sending unit 734 that may be configured to send a control node configuration update message to the network element to instruct the network element to either perform a load balancing operation or operate normally, based on the relative capacity value of the control node and the localness information of the control node.

Figure 8 illustrates an apparatus 830, according to certain embodiments. In one embodiment, the apparatus 830 may be a control node, or MME, including a local MME or a remote MME, or other similar control node for a network or access-network discussed above in connection with Figure 6. It should be noted that one of ordinary skill in the art would understand that apparatus 830 may include other components or features not shown in Figure 8. Additionally, the apparatus 830 may include one or more antennas 837 for transmitting and receiving signals and/or data to and from apparatus 830.

As illustrated in Figure 8, apparatus 830 may include a receiving unit 834 that may be configured to receive a relative capacity value of a control node and/or localness information of the control node. The apparatus 830 may also include a guiding unit 835 that may be configured to guide a user equipment to or away from the control node based on the relative capacity value of the control node.

In an embodiment, the guiding unit 835 may also be configured to guide the user equipment to the control node when the overload indicator of the control node includes an overload on indication. In another embodiment, the guiding unit 835 may further be configured to guide the user equipment away from the control node when the overload indicator of the control node includes an overload off indication.

The apparatus 830 may also include a performing unit 836 that may be configured to perform either a load balancing operation or a normal operation, based on the relative capacity value of the control node and the localness information of the control node. In an embodiment, the load balancing operation may include directing a user equipment to a local control node, or directing the user equipment to a remote control node. The apparatus 830 may further include a selecting unit 837 that may be configured to select another control node for traffic routing during the load balancing operation. Further, the apparatus 830 may include an establishing unit 838 that may be configured to establish a connection with a plurality of control nodes within a control node pool.

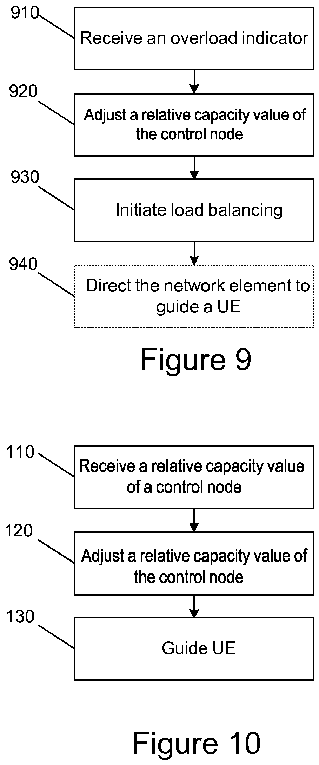

Figure 9 illustrates an example flow diagram of a method, according to certain embodiments. In certain embodiments, the method of Figure 9 may be performed by a control node, such as an MME. The method may include, at 910, receiving, at a control node, an overload indicator indicating a loading status of another control node. The method may also include, at 920, adjusting a relative capacity value of the control node based on the overload indicator for a network element. The method may further include, at 930, initiating load balancing tracking area update to direct the user equipment to reconnect to the control node. The method may also include, at 940, directing the network element to guide a user equipment to or away from the control node based on the relative capacity value of the control node.

In an embodiment, the adjusting may also include adjusting the relative capacity value of the control node based on the geographic identification of the network element. In another embodiment, the directing may also include directing the network element in the geographical area of the control node to guide the user equipment to the control node, and directing the network element in the geographical area of the control node to guide the user equipment away from the control node.

Figure 10 illustrates an example flow diagram of another method, according to certain embodiments. In certain embodiments, the method of Figure 10 may be performed by a network element, such as a base station, access point or eNB. The method may include, at 110, receiving a relative capacity value of a control node. The method may also include, at 120, guiding a user equipment to or away from the control node based on the relative capacity value of the control node. The method may further include, at 130, guiding the user equipment to the control node when the overload indicator includes an overload on indication, or guiding the user equipment away from the control node when the overload indicator includes an overload off indication.

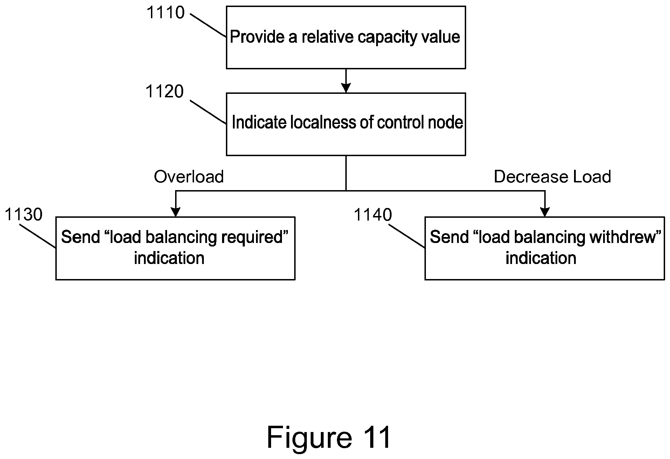

Figure 11 illustrates an example flow diagram of another method, according to certain embodiments. In certain embodiments, the method of Figure 11 may be performed by a control node, such as an MME. The method may include, at 110, providing a relative capacity value of a control node to a network element. The method may also include, at 1120, indicating the localness of the control node to the network element. The method may further include, at 1130, when an overload condition occurs in a local control node and a predefined load balancing start threshold is met, sending a control node configuration update message with a "load balancing required" indication included. The method may also include, at 1140, when the load becomes lower in the control node and a load balancing stop threshold is met, sending a control node configuration update message with a "load balancing withdrew" indication included.

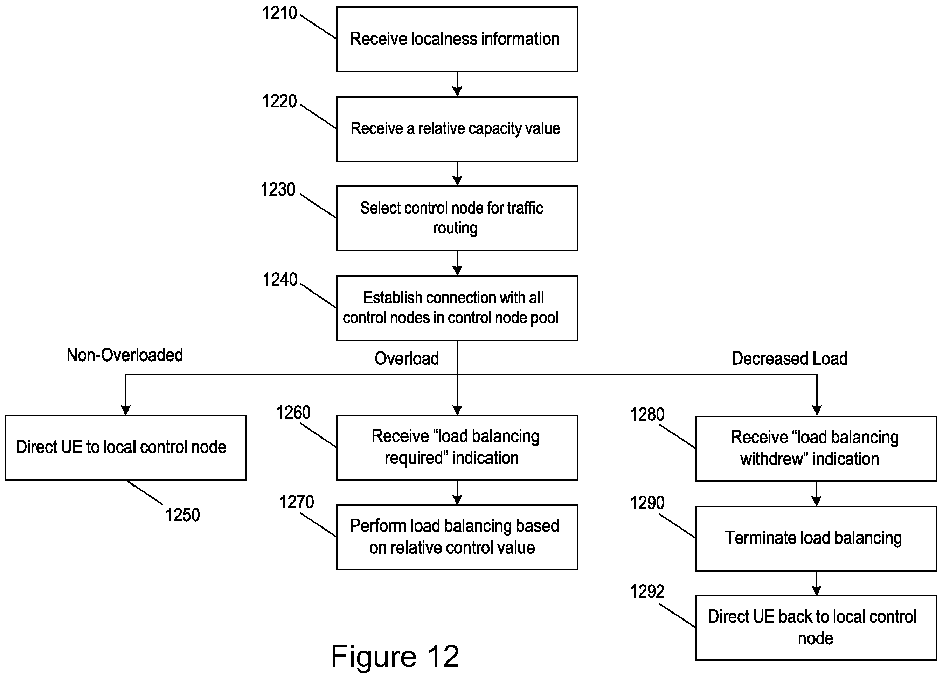

Figure 12 illustrates an example flow diagram of another method, according to certain embodiments. In certain embodiments, the method of Figure 12 may be performed by a network element, such as a base station, access point or eNB. The method may include, at 1210, receiving localness information of a control node. In an embodiment, the localness information may be in the form of a GUMMEI of a local or remote control node. The method may also include, at 1220, receiving a relative capacity value of all control nodes that are connected to the network element. The method may further include, at 1230, selecting another control node for traffic routing. The method may also include, at 1240, establishing a connection with all control nodes within a pool of control nodes.

Additionally, the method may include, at 1250, under normal non-overloaded conditions, ignoring the relative capacity value of the remote control node, and direct the user equipment to the control node with a local localness. The method may also include, at 1260, when an overload condition occurs in a local control node and a predefined load balancing start threshold is met, receiving a control node configuration update message with a "load balancing required" indication included. The method may further include, at 1270, performing load balancing based on the relative capacity value for all connected control nodes, including control nodes with a local or remote localness.

Further, the method may include, at 1280, when the load becomes lower in the control node and a load balancing stop threshold is met, receiving a configuration update message with a "load balancing withdrew" indication included. The method may also include, at 1290, terminating load balancing and performing normally as in a non-overloaded condition. The method may further include, at 1292, directing the user equipment from the remote control node back to the local control node. In an embodiment, load balancing may be triggered during a maintenance window from the remote control node based on an existing procedure by an operator.

Embodiments of the invention may provide several advantages and/or technical improvements. For example, it may be possible to enable UEs to connect to MMEs that are geographically close by to reduce signaling delay while providing MME redundancy. It may also be possible to reduce S1 latency, which may further reduce the time required for network procedures. Additionally, it may be possible to provide a solution for an operator requirement of keeping the local traffic locally while providing much needed network redundancy between MMEs in different geographic locations within an MME pool.

Embodiments of the invention may also provide differentiated services to the operator, and provide preference to local MMEs. It may also be possible to enable eNBs to select RCs of local MMEs even when remote MMEs and RC values are available as a standalone option. Further, the eNBs may also be able to select remote RCs only when local MMEs send an overload indication. Additionally, the above-described embodiments may be implemented without changes in standardization, and may be implemented by making relevant changes to the specification as well. Further, implementation of the above-described embodiments does not impact MME offloading functionality.

Additionally, the current LTE standard does not provide a mechanism to enable an eNB to select an MME based on a UE location. In particular, the eNB does not know whether the connected MME is local or remote. Further, there is no mechanism in the standard defined to provide location information to the eNB. However, in the real deployment, MME redundancy may be desired across different geographic areas to reduce MME cost. Without location (or localness) information, the eNB may not know which MME in the pool is local or remote, and may select an MME just based on relative capacity. This may lead to the eNB connecting to remote MMEs more often. Thus, embodiments of the present invention provide a solution of adding such location (localness) information into the whole scheme solve the various problems described above.

### Glossary

- 3GPP: 3rd Generation Partnership Project
- ASIC: Application-Specific Integrated Circuits
- CPU: Central Processing Unit
- DSP: Digital Signal Processors
- eNB: Evolved Node B
- EPC: Evolved Packet Core
- E-UTRAN: Evolved UTRAN
- FDD: Frequency Division Duplexing
- FPGA: Field-Programmable Gate Arrays
- GEO-ID: Geographic Identifier
- GUMMEI: Globally Unique MME Identifier
- HDD: Hard Disk Drive
- HW: Hardware
- IP: Internet Protocol
- LTE: Long Term Evolution
- Mbps: Megabits per second
- MME: Mobility Management Entity
- PLMN: Public Land Mobile Network
- RAM: Random Access Memory
- RC: Relative Capacity
- RNC: Radio Network Controllers
- RNS: Radio Network Subsystem
- ROM: Read Only Memory
- TAC: Tracking Area Code
- TAU: Tracking Area Update
- TDD: Time Division Duplexing
- UE: User Equipment
- UMTS: Universal Mobile Telecommunications System
- UTRAN: Universal Mobile Telecommunications System Radio Access Network

## Claims

1. A method, comprising, at a control node:
receiving an overload indicator indicating a loading status of another control node; and
adjusting, for a network element, a relative capacity value of the control node based on the overload indicator;
**characterized by**
- when the overload indicator indicates overload of the another control node, increasing the relative capacity value and directing the network element in a geographical area of the control node to guide a user equipment to the control node, and
- when the overload indicator does not indicate overload of the another control node, decreasing the relative capacity value and directing the network element in a geographical area of the another control node to guide the user equipment away from the control node.

2. The method according to claim 1, further comprising initiating load balancing tracking area update to direct the user equipment to reconnect to the control node.

3. The method according to claim 1 or claim 2,
wherein the control node and the network element comprise a geographic identification based on the geographical area of the control node and a geographic area of the network element, and
wherein the adjusting further comprises adjusting the relative capacity value based on the geographic identification of the network element.

4. An apparatus, comprising:
receiving means for receiving an overload indicator indicating a loading status of a control node; and
adjusting means for adjusting, for a network element, a relative capacity value of the apparatus based on the overload indicator;
**characterized in that** the apparatus further comprises
increasing and decreasing means and directing means for:
- increasing the relative capacity value and directing the network element in a geographical area of the apparatus to guide a user equipment to the apparatus, when the overload indicator indicates overload of the control node, and
- decreasing the relative capacity value and directing the network element in a geographical area of the control node to guide the user equipment away from the apparatus, when the overload indicator does not indicate overload of the control node.

5. The apparatus according to claim 4, further comprising initiating means for initiating load balancing tracking area update to direct the user equipment to reconnect to the apparatus.

6. The apparatus according to claim 4 or claim 5,
wherein the apparatus and the network element comprise a geographic identification based on the geographical area of the apparatus and a geographical area of the network element, and
wherein the adjusting means are further adapted to adjust the relative capacity value based on the geographic identification of the network element.

7. A computer program, embodied on a non-transitory computer readable medium, that when executed by a processor performs the method according to any one of claims 1-3.

## Patentansprüche

1. Verfahren, das an einem Steuerknoten Folgendes umfasst:
Empfangen eines Überlastungsindikators, der einen Auslastungsstatus eines anderen Steuerknotens angibt; und
Anpassen, für ein Netzelement, eines Relativkapazitätswerts des Steuerknotens basierend auf dem Überlastungsindikator;
**gekennzeichnet durch**
- wenn der Überlastungsindikator eine Überlastung des anderen Steuerknotens angibt, Erhöhen des Relativkapazitätswerts und Anweisen des Netzelements in einem geografischen Bereich des Steuerknotens, ein Benutzergerät zu dem Steuerknoten zu führen, und
- wenn der Überlastungsindikator keine Überlastung des anderen Steuerknotens angibt, Verringern des Relativkapazitätswerts und Anweisen des Netzelements in einem geografischen Bereich des anderen Steuerknotens, das Benutzergerät von dem Steuerknoten weg zu führen.

2. Verfahren nach Anspruch 1, ferner umfassend Initiieren einer Lastausgleich-Verfolgungsbereichsaktualisierung zum Anweisen des Benutzergeräts, sich mit dem Steuerknoten neuzuverbinden.

3. Verfahren nach Anspruch 1 oder Anspruch 2,
wobei der Steuerknoten und das Netzelement eine geografische Identifikation basierend auf dem geografischen Bereich des Steuerknotens und einem geografischen Bereich des Netzelements umfassen und
wobei das Anpassen ferner Anpassen des Relativkapazitätswerts basierend auf der geografischen Identifikation des Netzelements umfasst.

4. Einrichtung, die Folgendes umfasst:
Empfangsmittel zum Empfangen eines Überlastungsindikators, der einen Auslastungsstatus eines Steuerknotens angibt; und
Anpassungsmittel zum Anpassen, für ein Netzelement, eines Relativkapazitätswerts der Einrichtung basierend auf dem Überlastungsindikator;
**dadurch gekennzeichnet, dass** die Einrichtung ferner Folgendes umfasst:
Erhöhungs- und Verringerungsmittel und Anweisungsmittel zum:
- Erhöhen des Relativkapazitätswerts und Anweisen des Netzelements in einem geografischen Bereich der Einrichtung, ein Benutzergerät zu der Einrichtung zu führen, wenn der Überlastungsindikator eine Überlastung des Steuerknotens angibt, und
- Verringern des Relativkapazitätswerts und Anweisen des Netzelements in einem geografischen Bereich des Steuerknotens, das Benutzergerät von der Einrichtung weg zu führen, wenn der Überlastungsindikator keine Überlastung des Steuerknotens angibt.

5. Einrichtung nach Anspruch 4, ferner umfassend Initiierungsmittel zum Initiieren einer Lastausgleich-Verfolgungsbereichsaktualisierung, um das Benutzergerät dazu anzuweisen, sich mit der Einrichtung neuzuverbinden.

6. Einrichtung nach Anspruch 4 oder Anspruch 5,
wobei die Einrichtung und das Netzelement eine geografische Identifikation basierend auf dem geografischen Bereich der Einrichtung und einem geografischen Bereich des Netzelements umfassen und
wobei die Anpassungsmittel ferner ausgelegt sind zum Anpassen des Relativkapazitätswerts basierend auf der geografischen Identifikation des Netzelements.

7. Computerprogramm, umgesetzt auf einem nichtflüchtigen computerlesbaren Medium, das bei Ausführung durch einen Prozessor das Verfahren nach einem der Ansprüche 1-3 durchführt.

## Revendications

1. Procédé, comprenant, au niveau d'un nœud de commande :
la réception d'un indicateur de surcharge indiquant un état de charge d'un autre nœud de commande ; et
l'ajustement, pour un élément de réseau, d'une valeur de capacité relative du nœud de commande sur la base de l'indicateur de surcharge ;
**caractérisé par**
- lorsque l'indicateur de surcharge indique une surcharge de l'autre nœud de commande, l'augmentation de la valeur de capacité relative et l'orientation de l'élément de réseau dans une zone géographique du nœud de commande dans le but de guider un équipement utilisateur en direction du nœud de commande, et
- lorsque l'indicateur de surcharge n'indique pas de surcharge de l'autre nœud de commande, la diminution de la valeur de capacité relative et l'orientation de l'élément de réseau dans une zone géographique de l'autre nœud de commande dans le but de guider l'équipement utilisateur à distance du nœud de commande.

2. Procédé selon la revendication 1, comprenant en outre le lancement d'une mise à jour de zone de suivi d'équilibrage de charge pour orienter l'équipement utilisateur vers une reconnexion au nœud de commande.

3. Procédé selon la revendication 1 ou la revendication 2,
dans lequel le nœud de commande et l'élément de réseau comprennent une identification géographique basée sur la zone géographique du nœud de commande et une zone géographique de l'élément de réseau, et
dans lequel l'ajustement comprend en outre l'ajustement de la valeur de capacité relative basée sur l'identification géographique de l'élément de réseau.

4. Appareil, comprenant :
des moyens de réception pour recevoir un indicateur de surcharge indiquant un état de charge d'un nœud de commande ; et
des moyens d'ajustement pour ajuster, pour un élément de réseau, une valeur de capacité relative de l'appareil sur la base de l'indicateur de surcharge ;
**caractérisé en ce que** l'appareil comprend en outre
des moyens d'augmentation et de diminution et des moyens d'orientation pour :
- augmenter la valeur de capacité relative et orienter l'élément de réseau dans une zone géographique de l'appareil dans le but de guider un équipement utilisateur vers l'appareil, lorsque l'indicateur de surcharge indique une surcharge du nœud de commande, et
- diminuer la valeur de capacité relative et orienter l'élément de réseau dans une zone géographique du nœud de commande dans le but de guider l'équipement utilisateur à distance de l'appareil, lorsque l'indicateur de surcharge n'indique pas de surcharge du nœud de commande.

5. Appareil selon la revendication 4, comprenant en outre des moyens de lancement pour lancer une mise à jour de zone de suivi d'équilibrage de charge dans le but d'orienter l'équipement utilisateur vers une reconnexion à l'appareil.

6. Appareil selon la revendication 4 ou la revendication 5,
l'appareil et l'élément de réseau comprenant une identification géographique basée sur la zone géographique de l'appareil et une zone géographique de l'élément de réseau, et
dans lequel les moyens d'ajustement sont en outre conçus pour ajuster la valeur de capacité relative sur la base de l'identification géographique de l'élément de réseau.

7. Programme informatique, mis en œuvre sur un support non transitoire lisible par ordinateur qui, lorsqu'il est exécuté par un processeur, réalise le procédé selon l'une quelconque des revendications 1 à 3.
